# EUROPÄISCHE PATENTSCHRIFT

(11) **EP 0 618 670 B1**
(45) Veröffentlichungstag und Bekanntmachung des Hinweises auf die Patenterteilung: **11.06.1997**
(21) Anmeldenummer: 94104789.6
(22) Anmeldetag: 25.03.1994
(51) Int. Cl.: H02P 9/04, F02D 29/06

(54) **Wechselstromerzeuger**
Alternating current generator
Génératrice à courant alternatif

(30) Priorität: 27.03.1993 DE 4310786
(43) Veröffentlichungstag der Anmeldung: 05.10.1994
(73) Patentinhaber: Hagemeier, Käthe, D-26802 Moormerland (DE); Wirges, Chandrakanthi, D-22175 Hamburg (DE)
(72) Erfinder: Wirges, Gerhard O., D-22175 Hamburg (DE)
(74) Vertreter: Vonnemann, Gerhard, Dr.-Ing.

(56) Entgegenhaltungen:
- DD-A- 211 602
- US-A- 4 262 209
- US-A- 4 877 273

## Beschreibung

Die Erfindung betrifft einen Wechselstromerzeuger mit einem von einem Motor angetriebenen Wechselstromgenerator mit einem polumschaltbaren Magnetsystem, sowie einer Einrichtung zur Umschaltung der Pole des Magnetsystems in der Weise, daß die Frequenz der erzeugten Generatorspannung im wesentlichen konstant bleibt.

Derartige Stromerzeuger sind aus DE 26 08 629 A1, DE 37 39 726 A1, Brown Boveri Mitt. 6/7-70 S. 297-302 und beispielsweise aus Giersch/Harthus/Vogelsang, "Elektrische Maschinen", Teubner Verlag Stuttgart, bekannt.

Wechselstromerzeuger finden insbesondere in autarken Stromversorgungsnetzen (Inselnetzen) Anwendung, die immer dann eingesetzt werden müssen, wenn entweder keine allgemeine Stromversorgung verfügbar ist oder für besondere Anwendungen eine von dieser unabhängige Stromversorgung sichergestellt sein soll.

Kleinere Wechselstromerzeuger finden auch im Haushalt und Campingbereich, sowie insbesondere in der Sportschiffahrt Anwendung. Sie dienen dort zur Erzeugung der für die gängigen elektrischen Geräte des täglichen Bedarfs erforderlichen Netzspannungen. Da sie im allgemeinen tragbar sind, müssen sie sehr klein und sehr kompakt aufgebaut sein. Ein solcher Aufbau kann jedoch zu Problemen bei der Kühlung und Geräuschdämmung führen. Insbesondere beim Einsatz in engen räumlichen Verhältnissen, wie zum Beispiel in Wohnwagen oder auf Segeljachten, ist jedoch eine starke Geräuschentwicklung unerwünscht.

Der Erfindung liegt deshalb die Aufgabe zugrunde, einen Wechselstromerzeuger anzugeben, der im Vergleich zu bekannten Wechselstromerzeugern wesentlich geräuschärmer arbeitet.

Gelöst wird diese Aufgabe durch einen Wechselstromerzeuger nach Anspruch 1.

Dadurch, daß der Motor bei geringer Gesamtlast mit niedriger Drehzahl läuft, ergibt sich nicht nur eine wirksame Lärmminderung, sondern weiterhin der Vorteil, daß der Verschleiß an Motor und Lagerteilen wesentlich geringer ist, was zu einer wesentlichen Vergrößerung der Zuverlässigkeit sowie der Wartungsintervalle und der Lebensdauer führt. Bei Überschreiten einer bestimmten Gesamtlast läuft der Motor bei voller Drehzahl und gibt seine maximale Leistung beziehungsweise sein maximales Drehmoment ab. Die bei Wechselstromgeneratoren mit einer Erhöhung der Drehzahl einhergehende Erhöhung der Frequenz der erzeugt Spannung wird auf einfache Weise durch selbsttätiges Umschalten der Pole des Magnetsystems konstant gehalten.

Um bei einer Lastgröße im Bereich des vorbestimmten Umschaltwertes ein ständiges Umschalten der Motordrehzahl sowie der Pole zu verhindern, ist der Umschaltwert vorzugsweise mit einer Hysterese beaufschlagt. Bei Erreichen des vorbestimmten Umschaltwertes wird die Last ferner vorzugsweise für etwa 1,5 bis 2 Sekunden vom Generator getrennt, um eine störungsfreie Umschaltung zu gewährleisten.

Dadurch, daß der Generator des Wechselstromerzeugers ein Synchrongenerator ist, der insbesondere einphasig ausgebildet ist, vorzugsweise als Innenpolgenerator wobei das Magnetsystem auf einem innerhalb des Generators drehenden Rotor (Läufer) befestigt ist und ein die Generatorwicklungen tragender Anker (Ständer, Stator) ruhend angeordnet ist, ergibt sich eine vorteilhaft kleine Bauform. Dies ist besonders für den mobilen Einsatz wichtig.

Der Generator ist vorzugsweise so ausgelegt, daß der Rotor (Läufer) das Magnetsystem trägt, während die Ankerwicklungen stationär auf dem Ständer (Stator) vorgesehen sind. Da die das Magnetsystem aktivierende Erregerspannung wesentlich kleiner ist und nur geringere Ströme erfordert, als die in den Ankerwicklungen erzeugte Generatorspannung, ist eine wesentlich problemlosere Zuführung des Erregerstrom über Schleifringe auf das sich drehende Polrad möglich.

Wenn die Einrichtung zur Umschaltung der Pole des Läufers ein an einer Generatorachse befestigter drehzahlabhängiger, vorzugsweise fliehkraftabhängiger, Schalter, insbesondere elektronischer Schaltersatz ist, kann der Rotor schleifringlos ausgeführt werden.

Bei einer bevorzugten Ausführungsform der erfindungsgemäßen Vorrichtung erfolgt die drehzahlabhängige Polumschaltung durch einen auf der Generatorachse angeordneten fliehkraftabhängigen Schalter.

Außerdem ist vorgesehen, daß das Magnetsystem zwei getrennte Erregerwicklungen aufweist, die zur Polumschaltung auswählbar sind, wobei das Magnetsystem vorzugsweise vierpolig ist.

Ein Vorteil dieser Ausführungsform besteht darin, daß Generatoren mit vierpoligen Magnetsystemen verwendbar sind, die relativ einfach aufgebaut und kostengünstig sind. Die Polumschaltung kann sowohl durch Umkehr der Erregerstromrichtung in den einzelnen Polen des Magnetsystems als auch durch Auswahl getrennter Erregerwicklungen erfolgen.

Der Rotor ist aus Kostengründen vorzugsweise vierpolig ausgelegt. Er kann entweder zwei getrennte Erregerwicklungen, und zwar eine für vierpoligen und eine für zweipoligen Betrieb aufweisen, oder mit einer einzigen Erregerwicklung versehen sein, die an zwei Polen in ihrer Richtung umschaltbar ist.

Die Umschaltung erfolgt vorzugsweise mit Tyristoren, wobei die zur Ansteuerung erforderliche Elektronik entweder auf dem Rotor angebracht ist.

Zu diesem Zweck ist vorgesehen, daß eine Ansteuerschaltung für die elektronischen Schalter auf dem Rotor angeordnet ist, die vorzugsweise selbstversorgend ausgebildet ist.

Der Motor zum Antrieb des Generators ist vorzugsweise ein Verbrennungsmotor, dessen durch den Stellmotor eingestellte Drehzahl durch einen Tachogenerator konstantgehalten wird.

Der Anlauf des Generators erfolgt nach dem Umschalten ohne Probleme, wenn der Läufer einen zusätzlichen Permanentmagneten aufweist. Der Aufbau des Magnetfeldes im Rotor wird dadurch erleichtert.

Außerdem ist vorgesehen, daß der Stator eine Hilfswicklung aufweist, die kapazitiv belastet ist.

Zur besseren Anpassung in beiden Betriebszuständen ist vorgesehen, daß Schalter vorgesehen sind, zum Umschalten der Anlaufwicklung und/oder zur Veränderung der kapatitiven Last.

Es ist vorteilhaft, wenn die Wicklungen des Stators insbesondere die Generatorwicklung polumschaltbar ausgebildet ist.

Ein zu häufiges Umschalten kann dadurch vermieden werden, daß die Hysterese des Umschaltwertes einstellbar ist.

Weitere Einzelheiten, Merkmale und Vorteile der Erfindung ergeben sich aus der nachfolgenden Beschreibung eines Ausführungsbeispiels anhand der Zeichnungen. Es zeigt:
- Fig. 1: ein Blockschaltbild des erfindungsgemäßen Wechselstromerzeugers,
- Fig. 2: den Verlauf der Drehzahländerung in Abhängigkeit von der Größe der Gesamtlast,
- Fig. 3: eine Prinzipskizze eines schleifringlosen Einphasensynchrongenerators,
- Fig. 4: eine vierpolige Schaltung der Erregerwicklung,
- Fig. 5: eine zweipolige Schaltung der Erregerwicklung,
- Fig. 6: die Schaltung der Statorwicklungen für den vierpoligen Betrieb und
- Fig. 7: die Schaltung der Statorwicklung für den zweipoligen Betrieb.

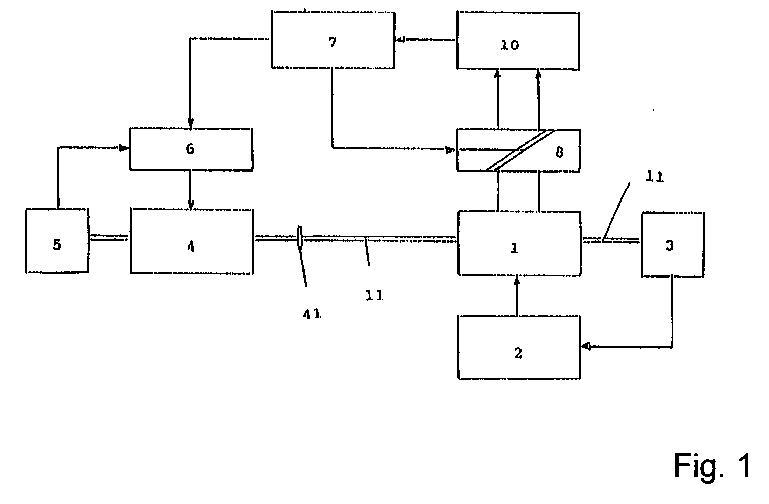

Gemäß dem in Figur 1 gezeigten Blockschaltbild ist ein Generator 1 mit einem Netz verbunden, welches eine Gesamtlast 10 darstellt. Das Magnetsystem des Generators trägt ferner eine Erregerwicklung 2, die mit einem fliehkraftbetätigten Schalter 3 so umgeschaltet wird, daß aufeinanderfolgende Pole des Magnetsystems entweder ungleichartig sind oder zumindest zwei gleichnamige Pole jeweils aufeinanderfolgen. Der fliehkraftabhängigen Schalter ist auf einer Generatorachse 11 befestigt und schaltet in Abhängigkeit von der Drehzahl des Generators.

Der Generator wird von einem Motor 4 angetrieben. Bei dem Motor handelt es sich im allgemeinen um einen Verbrennungsmotor, und zwar vorzugsweise um einen Dieselmotor, da diese besonders wirtschaftlich und zuverlässig arbeiten. Der Motor ist über eine Kupplung 41, die auch ein Getriebe aufweisen kann, mit der Generatorachse 11 verbunden. Die Drehzahlregelung des Motors erfolgt über ein Stellglied 6, mit dem zum Beispiel mittels eines kleinen Elektromotors der Vergaser verstellt wird. Mit einem Tachogenerator 5, der an der Motorwelle befestigt ist und das Stellglied 6 beaufschlagt, wird die Motordrehzahl konstant gehalten. Da die Frequenz der erzeugten Generatorspannung unmittelbar von der Generatordrehzahl abhängt, ist auf diese Weise eine Frequenzstabilisierung, insbesondere auch dann möglich, wenn sich die am Generator angeschlossene Last 10 ändert.

Die Größe der Last 10 wird durch eine Netzüberwachung 7 erfaßt. Wenn die Last einen vorbestimmten Umschaltwert erreicht, wird an das Stellglied 6 ein entsprechendes Umschaltsignal geführt. Durch das Stellglied 6 wird dann die Motordrehzahl zum Beispiel auf den doppelten Wert, z.B. von 1500 U/min. auf 3000 U/min., erhöht, indem mittels des Elektromotors der Vergaser entsprechend betätigt wird. Ferner wird bei der Auswertung der Signale des Tachogenerators 5 die nun erhöhte, doppelte Drehzahl des Motors 4 berücksichtigt. Mit Beaufschlagung des Stellgliedes 6 wird gleichzeitig ein Relais 8 angesteuert, mit dem kurzzeitig, zum Beispiel für 1,5 bis 2 Sekunden, die Gesamtlast 10 von Generator 1 getrennt wird. Die Relaiskontakte schließen sich nach Ablauf dieser Zeit entweder automatisch oder durch ein weiteres Schaltsignal der Netzüberwachung 7.

Während der Erhöhung der Motor- Generatordrehzahl schaltet schließlich auch der fliehkraftabhängige Schalter 3 die Erregerwicklungen des Magnetsystems so um, daß die Frequenz der Generatorspannung nach Erreichen der erhöhten Drehzahl wieder den gleichen Wert erreicht, wie beim Betrieb des Generator mit der ersten, geringeren Drehzahl.

Das Relais 8 trennt die Gesamtlast 10 solange vom Generator 1 bis die Umschaltvorgänge zwischen den beiden Drehzahlen abgeschlossen sind, d.h. der Motor 4 seine höhere bzw. niedrigere Drehzahl erreicht hat und die Erregerwicklungen des Magnetsystems umgeschaltet sind.

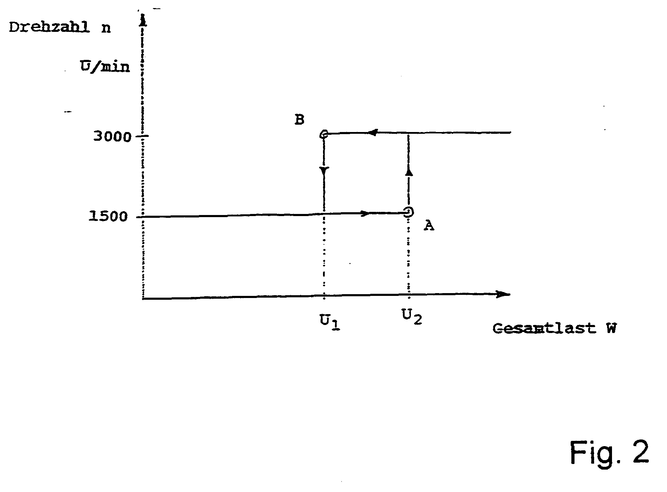

Figur 2 zeigt den Verlauf der Motor- bzw. Generatordrehzahl in Abhängigkeit von der an dem Generator angeschlossenen Gesamtlast. Aus dieser Darstellung wird deutlich, daß der Umschaltwert einer Hysterese unterliegt. Sofern nur ein Umschaltweg vorhanden ist, besteht die Gefahr, daß bei einer Gesamtlast 10 im Bereich dieses Umschaltwertes die Netzüberwachung 1 ständig zwischen den beiden Motordrehzahlen hin- und herschaltet, was zu einem unerwünschten Betriebszustand führen würde. Durch die Umschaltkennlinie gemäß Figur 2 erfolgt nach einer Umschaltung bei Punkt A auf hohe Umdrehungszahlen eine Rückkehr zu niedrigen Umdrehungszahlen auf Punkt B erst dann, wenn die Gesamtlast um einen vorbestimmten Mindestbetrag abgesunken ist. Entsprechendes gilt auch umgekehrt. Die Drehzahländerung in den beiden Umschaltpunkten A und B erfordert natürlich eine gewisse Mindestzeit innerhalb der ein Übergang zwischen den beiden Drehzahlbereichen stattfindet. Während dieser Zeitdauer, innerhalb der auch die Polumschaltung erfolgt, wird das Netz, wie oben erwähnt, durch das Relais 8 von dem Generator 1 abgetrennt.

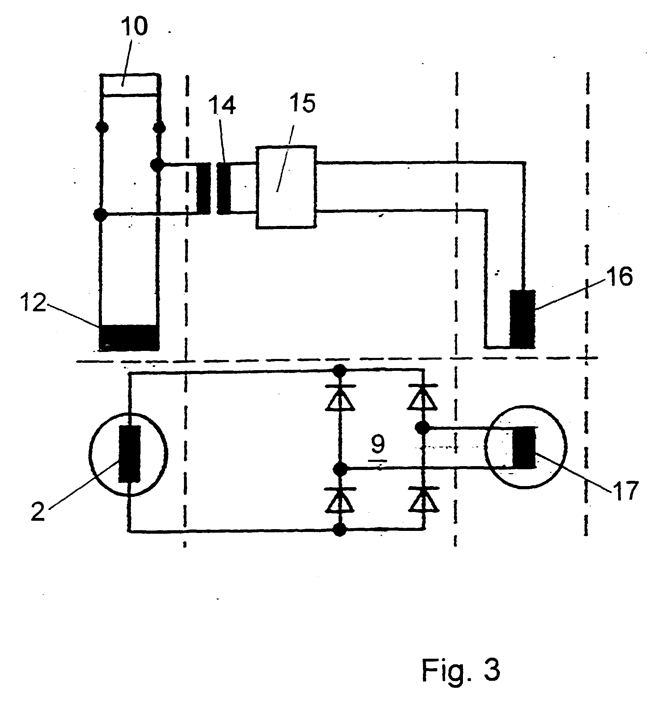

Figur 3 zeigt die prinzipielle Erregerschaltung für den erfindungsgemäßen Einphasensynchrongenerator. Unterhalb der horizontal unterbrochen dargestellten Linie sind die wesentlichen Teile des Rotors dargestellt. Sie bestehen aus der Erregerwicklung 2, die von Gleichstrom gespeist wird, der durch den Gleichrichtersatz 9 zur Verfügung gestellt wird. Der Gleichrichter 9 richtet den Strom, der in der Wicklung 17 induziert wird.

Der oberhalb der unterbrochen dargestellten Linie dargestellte Stator besteht aus der Generatorwicklung 12, an der die Gesamtlast 10 angeschlossen ist. Ein Teil der erzeugten Leistung wird zur Erregung benötigt und über einen Transformator 14, sowie Spannungsregler 15 der Wicklung 16 zugeführt. Zum erleichterten Starten des Generators ist im Läufer zusätzlich zur Erregerwicklung 2 ein Parmanentmagnet vorgesehen.

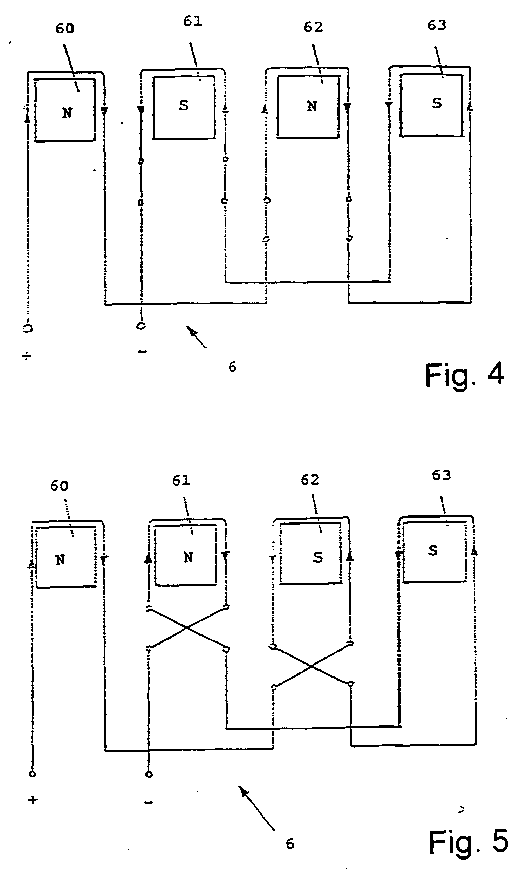

Figur 4 zeigt ein Magnetsystem des Generators, welches eine Erregerwicklung 2 und vier Pole 60 bis 63 aufweist. Die Erregerwicklung ist in der üblichen Weise um die Pole geführt, so daß sich N-S-Pole abwechseln und das Magnetsystem vierpolig arbeitet. Das Magnetsystem ist im allgemeinen als drehendes Teil (Läufer, Rotor) im Inneren der Maschine als Polrad gelagert. Der Erreger-Gleichstrom wird dem sich drehenden Polrad über zwei Schleifringe zugeführt. Der Anker (Ständer, Stator), in dem die Generatorspannung induziert wird, ist ruhend außen am Umfang der Maschine angeordnet. Da die Erregerleistung wesentlich kleiner ist als die Generatorleistung, wird diese Anordnung bevorzugt. Bei der in Figur 4 dargestellten Schaltung eines vierpoligen Magnetsystems werden bei einer Umdrehung des Polrades zwei Perioden der Generatorspannung erzeugt. Bei einer ersten Drehzahl des Generators von zum Beispiel 1.500 U/min ergibt sich eine Generatorfrequenz von 50 Hz.

Figur 5 zeigt eine zweipolige Schaltung der Erregerwicklung 2. Bei dieser Schaltung läuft der Strom um die Pole 61 und 62 in umgekehrter Richtung, so daß deren Polarität wechselt und nun jeweils zwei gleichnamige Pole in dem Magnetsystem aufeinander folgen. Bei dieser Schaltung entsteht bei einer Umdrehung des Polrades nur eine Periode. Läuft der Generator mit der zweiten, erhöhten Motordrehzahl von 3.000 U/min, so ergibt sich wiederum eine Generatorfrequenz von 50 Hz.

Alternativ zu der in den Figuren 4 und 5 gezeigten Umschaltung der Erregerwicklung an zwei Polen kann das Magnetsystem auch zwei vollständig getrennte Erregerwicklungen aufweisen, die entsprechend der Motordrehzahl ausgewählt werden. Eine der Erregerwicklungen kann dabei gemäß Figur 4 geschaltet sein, während die andere Erregerwicklung nur um zwei Pole des Magnetsystems geführt ist.

Neben einer Umschaltung der Erregerwicklungen kann es erforderlich sein, auch im Ständer eine kapazitiv belastete Hilfswicklung und/oder die Generatorwicklung umzuschalten.

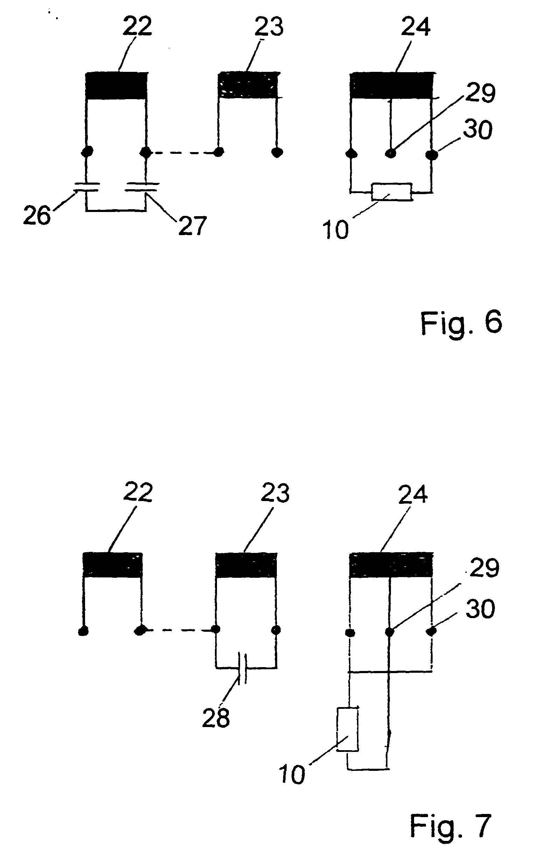

Die entsprechenden Schaltungen für Generatorwicklungen und Hilfswicklungen sind in den Figuren 6 und 7 gezeigt. Sie dienen der besseren Spannungsanpassung und der Verbesserung des Anlaufverhaltens.

Figur 6 zeigt die Schaltung der Statorwicklungen beim vierpoligen Betrieb. Die Last ist dabei an den äußeren Kontakten der Generatorwicklung 24 angelegt. Hilfswicklung 22 ist eine in Reihe geschaltete kapazitive Last 26, 27 aufgeschaltet.

Für den zweipoligen Betrieb bei der höheren Drehzahl wird die Last 10 an Kontakt 29 angelegt. Dadurch wird die Spannung angepaßt. Hilfswicklung 22 wird geöffnet, während Hilfswicklung 23 mit einer kapazitiven Last 28 beaufschlagt wird. Dadurch ist auch nach den jeweiligen Umschaltvorgängen gewährleistet, daß der Synchrongenerator selbsttätig ohne Probleme anläuft. Das Anlaufverhalten ist deshalb besonders wichtig, da beim Betrieb in mobilen Stromerzeugern häufig auch im Netz Motoren vorhanden sind, die beispielsweise Kompressoren antreiben. Solche Kompressoren mit ihrem hohen Anlaufmoment bewirken eine besonders hohe Stromaufnahme der sie treibenden Elektromotoren.

Auch die Generatorwicklung wird durch entsprechende Umschaltung an das geänderte Polrad angepaßt. Dazu werden die Schalter und die entsprechenden Wicklungen in bekannter Weise vom Fachmann ausgelegt.

Der eigentliche Umschaltvorgang kann über den fliehkraftabhängigen Schalter zum Beispiel mittels Tyristoren erfolgen, wobei die erforderliche Elektronik auf dem Rotor angeordnet sein kann. Sofern ein Motor verwendet wird, der zwischen anderen Drehzahlbereichen umgeschaltet werden soll, kann auch ein Polrad verwendet werden, welches zum Beispiel acht Pole aufweist, wobei dann zwischen achtpoligem und vierpoligem Betrieb umgeschaltet wird und zur Erzeugung eines Spannungsfrequenz von 50 Hz Generatordrehzahlen von 1.500 bzw. 750 U/min. erforderlich sind.

### BEZUGSZEICHENLISTE

- 1: Generator
- 11: Generatorachse
- 2: Erregerwicklung
- 3: Schalter
- 4: Motor
- 41: Kupplung
- 5: Tachogenerator
- 6: Stellglied
- 7: Netzüberwachung
- 8: Relais
- 9: Gleichrichtersatz
- 10: Gesamtlast
- 12: Generatorwicklung
- 14: Transformator
- 15: Spannungsregler
- 16: Wicklung
- 17: Wicklung
- 22: Hilfswicklung
- 23: Hilfswicklung
- 24: Generatorwicklung
- 26: Kondensator
- 27: Kondensator
- 28: Kondensator
- 29: Kontakt
- 30: Kontakt
- 60: Pol
- 61: Pol
- 62: Pol
- 63: Pol

## Patentansprüche

1. Wechselstromerzeuger mit einem von einem Motor (4) angetriebenen Wechselstromgenerator (1) mit einem polumschaltbaren Magnetsystem, sowie einer Einrichtung (3) zur Umschaltung der Pole des Magnetsystems in der Weise, daß die Frequenz der erzeugten Generatorspannung im wesentlichen konstant bleibt, **gekennzeichnet durch** eine Netzüberwachung (7) zur Erfassung der Größe einer an dem Generator (1) anliegenden Gesamtlast (10), ein Stellglied (6), welches von der Netzüberwachung (7) beaufschlagt und mit dem die Drehzahl des Motors (4) in Abhängigkeit von der erfaßten Gesamtlast (10) umschaltbar ist, wobei das Stellglied (6) beim Überschreiten eines oberen Umschaltwertes (A) der Gesamtlast (10) auf die höhere und beim Unterschreiten eines unteren Umschaltwertes (B) der Gesamtlast auf die niedrigere Drehzahl umschaltet, wodurch eine Umschalthysterese erzielt wird, und eine Schalter vorgesehen ist, zum selbsttätigen Trennen und wieder Aufschalten der Gesamtlast (10) bei Erreichen des vorbestimmten Umschaltwertes für eine Zeitspanne der Drehzahlanpassung.

2. Wechselstromerzeuger nach Anspruch 1, **dadurch gekennzeichnet**, daß der Generator des Wechselstromerzeugers ein Synchrongenerator ist, der insbesondere einphasig ausgebildet ist, vorzugsweise als Innenpolgenerator wobei das Magnetsystem auf einem innerhalb des Generators drehenden Rotor (Läufer) befestigt ist und ein die Generatorwicklungen tragender Anker (Ständer, Stator) ruhend angeordnet ist.

3. Vorrichtung nach Anspruch 1 oder 2, **dadurch gekennzeichnet**, daß die Einrichtung zur Umschaltung der Pole des Läufers ein an einer Generatorachse befestigter drehzahl abhängiger, vorzugsweise fliehkraftabhängiger, Schalter (3), insbesondere elektronischer Schaltersatz ist.

4. Wechselstromerzeuger nach mindestens einem der Ansprüche 1 bis 3, **durch gekennzeichnet**, daß das Magnetsystem zwei getrennte Erregerwicklungen aufweist, die zur Polumschaltung auswählbar sind, wobei das Magnetsystem vorzugsweise vierpolig ist.

5. Wechselstromerzeuger nach mindestens einem der Ansprüche 1 bis 4, **durch gekennzeichnet**, daß das Magnetsystem eine Erregerwicklung aufweist, deren Verlauf um einzelne Pole zur Polumschaltung umschaltbar ist.

6. Wechselstromerzeuger nach mindestens einem der Ansprüche 1 bis 5, **durch gekennzeichnet**, daß die Umschaltung der Erregerwicklungen mittels elektronischer Schalter, vorzugsweise Tyristoren erfolgt.

7. Wechselstromerzeuger nach Anspruch 6, **durch gekennzeichnet**, daß eine Ansteuerschaltung für die elektronischen Schalter auf dem Rotor angeordnet ist, die vorzugsweise selbstversorgend ausgebildet ist.

8. Wechselstromerzeuger nach mindestens einem der Ansprüche 1 bis 7, **durch gekennzeichnet**, daß der Motor (1) ein Verbrennungsmotor ist, welcher zur Konstanthaltung der Motordrehzahl einen Tachogenerator (5) aufweist.

9. Wechselstromerzeuger nach einem oder mehreren der vorhergehenden Ansprüche, **durch gekennzeichnet**, daß der Läufer einen zusätzlichen Permanentmagneten aufweist.

10. Wechselstromerzeuger nach einem oder mehreren der vorhergehenden Ansprüche, **durch gekennzeichnet**, daß der Stator eine Hilfswicklung aufweist, die kapazitiv belastet ist.

11. Wechselstromerzeuger nach einem oder mehreren der vorhergehenden Ansprüche, **durch gekennzeichnet**, daß Schalter vorgesehen sind, zum Umschalten der Anlaufwicklung und/oder zur Veränderung der kapatitiven Last.

12. Wechselstromerzeuger nach einem oder mehreren der vorhergehenden Ansprüche, **durch gekennzeichnet**, daß die Wicklungen des Stators insbesondere die Generatorwicklung polumschaltbar ausgebildet ist.

13. Wechselstromerzeuger nach einem oder mehreren der vorhergehenden Ansprüche, **durch gekennzeichnet**, daß die Hysterese des Umschaltwertes einstellbar ist.

## Claims

1. Device for generating alternating current, having an alternating current generator (1) with a pole-changing magnet system driven by an engine (4), as well as a device (3) for changing the poles (60 to 63) of the magnet system so that the frequency of the generator voltage which is produced remains substantially constant, **characterised by** a mains monitor (7) to detect the magnitude of a total load (10) applied to the generator (1), a final controlling element (6), which receives a signal from the mains monitor (7) and with which the speed of the engine can be varied in accordance with the detected total load (10), whereby the final controlling element (6) changes to the higher speed when the total load (10) exceeds an upper switching value (A) and changes to the lower speed when the total load falls below a lower switching value (B), a switching hysteresis being achieved, and a switch is provided for automatically isolating and reconnecting the total load (10) for the period of the speed adjustment when the predetermined switching value (A, B) is reached.

2. Device for generating alternating current according to Claim 1, characterised in that the generator of the device for generating alternating current is a synchronous generator, in particular, constructed as a single-phase type, preferably as an inner pole generator, the magnet system being mounted on a rotor rotating within the generator and an armature supporting the generator windings being arranged in a stationary manner.

3. Device according to Claim 1 or 2, **characterised in that** the device for changing the poles of the rotor is a speed-dependent, preferably centrifugal force-dependent switch (3), in particular an electronic switch block.

4. Device for generating alternating current according to at least one of the Claims 1 to 3, **characterised in that** the magnet system has two separate exciter windings which can be selected for pole-changing, the magnet system preferably being of a four-pole type.

5. Device for generating alternating current according to at least one of the Claims 1 to 4, **characterised in that** the magnet system has one exciter winding whose characteristic can be switched by individual poles for pole-changing.

6. Device for generating alternating current according to at least one of the Claims 1 to 5, **characterised in that** the switching of the exciter windings is effected by means of electronic switches, preferably thyristors.

7. Device for generating alternating current according to Claim 6, **characterised in that** a trigger circuit for the electronic switches is arranged on the rotor, which is preferably self-supplying.

8. Device for generating alternating current according to at least one of the Claims 1 to 7, **characterised in that** the engine (1) is an internal combustion engine which has a tacho-generator (5) for maintaining the engine speed at a constant value.

9. Device for generating alternating current according to one or more of the preceding Claims, **characterised in that** the rotor has an additional permanent magnet.

10. Device for generating alternating current according to one or more of the preceding Claims, **characterised in that** the stator has an auxiliary winding which has a capacitive load.

11. Device for generating alternating current according to one or more of the preceding Claims, **characterised in that** the switches are provided to change over the starting winding and/or to vary the capacitive load.

12. Device for generating alternating current according to one or more of the preceding Claims, **characterised in that** the stator windings, in particular the generator winding, are constructed as pole-changing windings.

13. Device for generating alternating current according to one or more of the preceding Claims, **characterised in that** the hysteresis of the switching value is adjustable.

## Revendications

1. Alternateur (1) comportant un axe entraîné par un moteur (4), un système magnétique à commutation de pôles ainsi qu'une installation (3) pour commuter les pôles (60-63) du système magnétique de façon que la fréquence de la tension fournie par l'alternateur soit pratiquement constante,
caractérisé par
un moyen de surveillance de réseau (7) pour détecter l'amplitude d'une charge totale (10) appliquée à l'alternateur (1), un organe de réglage (6) sollicité par le moyen de surveillance de réseau (7) et qui permet de commuter la vitesse de rotation du moteur (4) en fonction de la charge totale (10) détectée, et, en cas de dépassement d'une limite supérieure de commutation (A) de la charge totale (10), l'organe de réglage (6) commute sur une vitesse de rotation plus élevée tandis qu'en cas de dépassement vers le bas d'une limite inférieure de commutation (B) de la charge totale, il commute sur une vitesse de rotation plus faible, pour avoir une hystérésis de commutation, ainsi qu'un interrupteur pour couper automatiquement et brancher de nouveau la charge totale (10) lorsqu'on atteint la valeur de commutation (A, B) prédéterminée, pour un intervalle de temps de l'adaptation de la vitesse de rotation.

2. Alternateur selon la revendication 1,
caractérisé en ce que
le générateur de l'alternateur est un générateur synchrone notamment monophasé, et de préférence un générateur à pôles intérieurs, le système magnétique étant fixé sur un rotor tournant à l'extérieur du générateur et un induit fixe (stator) portant les enroulements du générateur.

3. Alternateur selon la revendication 1 ou 2,
caractérisé en ce que
l'installation de commutation des pôles du rotor est un interrupteur (3), notamment un jeu d'interrupteurs électroniques, fixé sur un axe du générateur et qui dépend notamment de la vitesse de rotation, de préférence de la force centrifuge.

4. Alternateur selon au moins l'une des revendications 1 à 3,
caractérisé en ce que
le système magnétique comprend deux enroulements d'excitation séparés qui peuvent être sélectionnés pour la commutation des pôles, le système magnétique étant notamment quadripolaire.

5. Alternateur selon au moins l'une des revendications 1 à 4,
caractérisé en ce que
le système magnétique comprend un enroulement d'excitation dont le parcours autour des différents pôles peut être commuté pour la commutation polaire.

6. Alternateur selon au moins l'une des revendications 1 à 5,
caractérisé en ce que
la commutation des enroulements d'excitation se fait à l'aide d'interrupteurs électroniques, de préférence des thyristors.

7. Alternateur selon la revendication 6,
caractérisé par
un circuit de commande pour les interrupteurs électroniques portés par le rotor, et qui est de préférence autoalimenté.

8. Alternateur selon au moins l'une des revendications 1 à 7,
caractérisé en ce que
le moteur (1) est un moteur à combustion interne qui comporte un générateur tachymétrique (5) pour maintenir constante la vitesse de rotation.

9. Alternateur selon une ou plusieurs des revendications précédentes,
caractérisé en ce que
le rotor comporte un aimant permanent supplémentaire.

10. Alternateur selon une ou plusieurs des revendications précédentes,
caractérisé en ce que
le stator comporte un enroulement auxiliaire à charge capacitive.

11. Alternateur selon une ou plusieurs des revendications précédentes,
caractérisé en ce que
il comporte des interrupteurs pour commuter l'enroulement de démarrage et/ou modifier la charge capacitive.

12. Alternateur selon une ou plusieurs des revendications précédentes,
caractérisé en ce que
les enroulements du stator, et notamment l'enroulement du générateur, sont réalisés avec commutation polaire.

13. Alternateur selon une ou plusieurs des revendications précédentes,
caractérisé en ce que
l'hystérésis de la limite de commutation est réglable.
